# EUROPEAN PATENT APPLICATION

(11) **EP 2 000 287 A1**
(43) Date of publication of application: **10.12.2008**
(21) Application number: 07740797.1
(22) Date of filing: 27.03.2007
(51) Int. Cl.: B29C 65/16, B29C 65/78, B29L 23/00, F16L 21/02

(54) **RESIN PIPE WELDING DEVICE**

(30) Priority: 27.03.2006 JP 2006085526
(71) Applicant: Rex Industries Co., Ltd., Osaka-shi, Osaka 542-0086 (JP); The Furukawa Electric Co., Ltd., Chiyoda-ku Tokyo 100-8322 (JP); Ube Industries, Ltd., Ube-Shi, Yamaguchi 755-8633 (JP)
(72) Inventor: AZUMA, Jiro, Osaka-shi, Osaka 5780948 (JP); IKENAKA, Yoshiharu, Osaka-shi, Osaka 5780948 (JP); TANAKA, Kanji, Tokyo 1008322 (JP); FUJISAKI, Akira, Tokyo 1008322 (JP); UEDA, Junji, Ube-shi, Yamaguchi 7558633 (JP); FUKUNAGA, Masahiro, Ube-shi, Yamaguchi 7558633 (JP); NAKAMURA, Koji, Ube-shi, Yamaguchi 7558633 (JP); AKAGAWA, Yoshifumi, Ube-shi, Yamaguchi 7558633 (JP)
(74) Representative: Cohausz & Florack
(86) International application number: PCT/JP2007/057361
(87) International publication number: WO 2007/114414

(57) **Abstract**

An apparatus (10) for melt-adhering resin pipes, comprising support means (11, 12) for supporting a resin pipe (1) engaged with a resin joint (2), and laser irradiation means (30) for irradiating a laser beam onto a portion of the resin pipe engaged with the resin joint. Further, an axial direction driving means and a circumferential direction driving means may be provided so that the laser irradiation means (30) moves in the circumferential direction and in the axial direction of the resin pipe.

## Description

### Technical Field:

This invention relates to an apparatus for melt-adhering resin pipes, such as melt-adhering a resin pipe used as a city water pipe, a sewer pipe or a gas pipe with a joint made of resin.

### Background Art:

In pipes which are made of resin, such as city water pipes, sewer pipes and gas pipes, the resin pipes are inserted and connected into a resin joint, such as T-shaped joint, elbow joint, socket joint or saddle joint while heating and melting the inner surfaces thereof and the outer surfaces of the resin pipes.

In recent years, an electro-fusion system has been employed for improving the workability and quality of the connection. This system uses a so-called electro-fusion joint (hereinafter referred to as "EF joint") in which a coiled heating wire is imbedded therein, and melt-adheres the resin pipe to the joint by flowing an electric current to the heating wire in the EF joint (e.g., see Japanese Unexamined Patent Publication No. 9-320738).

However, the EF joint has the heating wire imbedded therein and is most expensive than ordinary joints so that the entire cost is considerably more expensive when many joints are used.

In addition, when the entire joint and the related resin pipe are melt-adhered together by being heated over relatively wide areas, it is necessary to wait until the joint and the resin pipe are cooled and solidified. Therefore, a relatively long period of time is necessary even after the melt-adhering work has been finished.

The present invention has been accomplished in view of the above circumstances and has an object of providing an apparatus for melt-adhering resin pipes, which is capable of melt-adhering an ordinary joint made from a resin and a resin pipe together relatively inexpensively.

### Disclosure of the Invention:

In order to achieve the above object according to a first aspect, there is provided an apparatus for melt-adhering resin pipes, comprising support means for supporting a resin pipe engaged with a resin joint, and laser irradiation means for irradiating a laser beam onto a portion of the resin pipe engaged with the resin joint to melt-adhere the resin joint and the resin pipe together.

In other words, according to the first aspect, the laser beam is irradiated from the exterior of the joint to melt-adhere the joint onto the resin pipe. Therefore, no EF joint is necessary, and the melt-adhering operation can be done inexpensively. In addition, since the melt-adhesion is done by using the laser beam, neither the joint nor the resin pipe develops strain. According to the first aspect, further, it is sufficient to irradiate the laser beam onto a desired melt-adhering portion. Therefore, unlike the conventional technology, the entire joint and the resin pipe do not have to be heated over relatively wide areas requiring, therefore, a decreased amount of energy and a shortened period of time after the end of the melt-adhering work.

According to a second aspect in relation to the first aspect, the resin pipe is made from a resin material having property to absorb the laser beam, the resin joint is made from a resin material having property to transmit through the laser beam, and a material having property to absorb the laser beam is applied onto at least a portion on the inner surface of the resin joint.

In other words, according to the second aspect, the laser beam that has passed through the joint heats the portion where the laser beam-absorbing material is applied and the resin pipe, so that the joint having the applied portion and the resin pipe are reliably melt-adhered together. It is preferable that the laser beam-absorbing material is applied onto the circumferential protuberances formed on the inner surface of the joint.

According to a third aspect in relation to the first or second aspect, further comprising a cylindrical housing for surrounding the resin joint in concentric with the resin pipe, and the support means is engaged with the end surfaces of the cylindrical housing.

In other words, according to the third aspect, the portion irradiated with the laser beam is surrounded by the housing. Therefore, the laser beam does not leak to the exterior of the housing, and the apparatus can be safely used for melt-adhering the resin pipes. This permits the apparatus for melt-adhering the resin pipes to be used on the outdoor working site, for example, on the gas pipe working site or city water pipe working site.

According to a fourth aspect in relation to the third aspect, the laser irradiation means is mounted on the circumferential surface of the cylindrical housing, and the apparatus further comprises a circumferential drive means for driving the laser irradiation means together with the cylindrical housing in the circumferential direction about the axis of the resin pipe.

In other words, according to the fourth embodiment, the laser beam irradiation means is rotated together with the housing in the circumferential direction about the axis, and the position for irradiating the laser beam can be easily moved in the circumferential direction along a portion where the resin pipe is engaged. Therefore, if the laser beam irradiation means is rotated one turn, the joint, such as the socket joint, can be annularly melt-adhered to the resin pipe. It is preferable that the irradiation operation in the circumferential direction is effected on at least two different positions on the engaged portion.

According to a fifth aspect in relation to the fourth aspect, a counterweight for the laser irradiation means is provided on the side opposite to the laser irradiation means with the cylindrical housing interposed therebetween.

In other words, according to the fifth embodiment, the counterweight and the laser irradiation means are balanced, and the laser irradiation means can be easily rotated on the outer surface of the housing. When the resin pipe is arranged in a horizontal direction, it is particularly advantageous to provide the counterweight.

According to a sixth aspect in relation to any one of the third to fifth aspect, further comprising an axial drive means for driving the laser irradiation means so as to slide along the outer surface of the cylindrical housing in the axial direction of the resin pipe.

In other words, according to the sixth embodiment, the laser beam irradiation means is slid in the axial direction along the outer surface of the housing making it easy to adjust the irradiation position where the laser beam is irradiated to the joint and to the resin pipe.

According to a seventh aspect in relation to any one of the first to sixth aspect, further comprising a pushing means for pushing the resin joint to the resin pipe in the proximity of a portion where the resin pipe is engaged with the resin joint.

In other words, according to the seventh embodiment, the resin pipe and the joint are pushed to each other to reliably accomplish the melt-adhesion by the laser.

According to an eighth aspect in relation to any one of the first to seventh aspect, the resin joint is a saddle joint or a socket joint. However, the resin joint may be another joint, such as a T-shaped joint or an elbow joint.

The above object, features and advantages of the invention as well as other objects, features and advantages thereof will become further clear from the detailed description of representative embodiments of the invention shown in the accompanying drawings.

### Brief Description of the Drawings:

Fig. 1a is a partial sectional view in the lengthwise direction of an apparatus for melt-adhering resin pipes according to a first embodiment of the invention;
Fig. 1b is a top view of the apparatus for melt-adhering resin pipes shown in Fig. 1a;
Fig. 2a is a sectional view in the transverse direction of the apparatus for melt-adhering resin pipes shown in Fig. 1a;
Fig. 2b is an enlarged view of a portion surrounded by a circle in Fig. 2a;
Fig. 3 is a partial enlarged view of the apparatus for melt-adhering resin pipes shown in Fig. 1;
Fig. 4 is a perspective view of a saddle joint;
Fig. 5 is a sectional view thereof in the transverse direction between a line X1 and a cylindrical portion 2b shown in Fig. 4;
Fig. 6 is a sectional view in the transverse direction illustrating the operation of a pushing member for the saddle joint used in the apparatus for melt-adhering resin pipes of the invention;
Fig. 7 is a view similar to Fig. 1 and illustrates a case where a socket joint is to be melt-adhered to the resin pipe by using the apparatus for melt-adhering resin pipes;
Fig. 8a is a side view of the socket joint;
Fig. 8b is a side sectional view of the socket joint;
Fig. 9 is a partial sectional view in the lengthwise' direction of a pushing member for the socket joint used in the apparatus for melt-adhering resin pipes of the invention;
Fig. 10 is a plan view of a socket joint clamp of the pushing member for the socket joint shown in Fig. 9; and
Fig. 11 is a side view of the apparatus for melt-adhering resin pipes according to a second embodiment of the invention.

### Best Mode for Carrying Out the Invention:

The embodiments of the invention will now be described with reference to the accompanying drawings. In the drawings, the same members are denoted by the same reference numerals. For easy comprehension, the scales of the drawings are suitably varied.

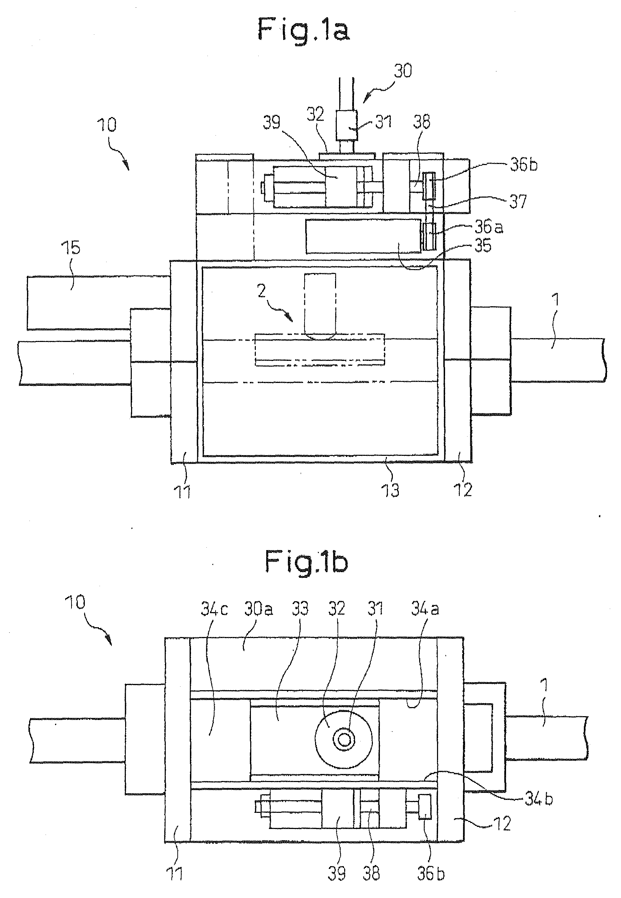

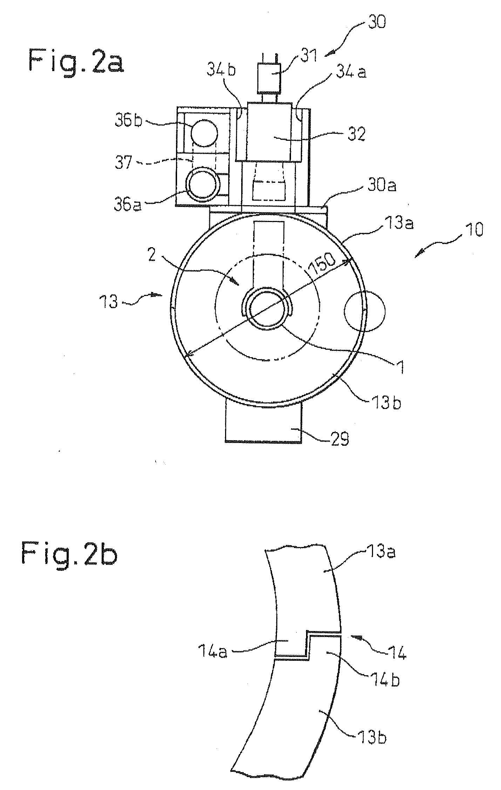

Fig. 1a is a partial sectional view in the lengthwise direction of an apparatus for melt-adhering resin pipes according to a first embodiment of the invention and Fig. 1b is a top view of the apparatus for melt-adhering resin pipes shown in Fig. 1a. Further, Fig. 2a is a sectional view in the transverse direction of the apparatus for melt-adhering resin pipes shown in Fig. 1a.

Fig. 1a and other drawings illustrate a state where a saddle joint 2 is mounted on a resin pipe 1 at a desired position. The resin pipe 1 is made from a known resin material having property to absorb the laser beam. On the contrary, the joint, such as a saddle joint 2 or a socket joint 3 that will be described later is made from another resin material having property to transmit through the laser beam.

The apparatus 10 for melt-adhering resin pipes according to the invention includes disk-type support members 11 and 12 for supporting the resin pipe 1 at two different portions. The support members 11 and 12 are each constituted by two half-split members which hold the resin pipe 1 from both sides so as to fix the resin pipe 1 at the centers of the support members 11 and 12.

Between the support members 11 and 12 as shown, a cylindrical housing 13 is arranged so as to rotate relative to the support members 11 and 12. Openings substantially corresponding to the outer diameter of the resin pipe 1 are formed in both end surfaces of the housing 13, and the resin pipe 1 supported by the support members 11 and 12 penetrates through the housing 13 passing through these openings. As can be seen from Fig. 2a, the cylindrical housing 13 is substantially arranged in concentric with the resin pipe 1.

The housing 13 shown in Fig. 2a, too, is constituted by two half-split portions 13a and 13b like the support members 11 and 12. Referring to Fig. 2b which is an enlarged view of a portion surrounded by a circle in Fig. 2a, junction edge portions of the half-split portions 13a, 13b are provided with protuberances 14a, 14b of complementary shapes along the axial direction of the housing. When the housing 13 is assembled, these protuberances 14a, 14b engage with each other to act as a step joint enabling, therefore, the housing 13 to be substantially sealed.

As can be seen from Fig. 2a, in particular, a support plate 30a for supporting a laser irradiation portion 30 is attached to a top part of the half-split portion 13a of the housing 13. The laser irradiation portion 30 installed on the support plate 30a includes a laser head 31 connected to a known laser source (not shown). The laser head 31 is coupled to a cylinder 32. As shown, the laser head 31 is positioned on the support plate 30a so that the laser beam from the laser head 31 is irradiated to the inside in the radial direction of the housing 13 through the cylinder 32. Though not shown, holes are formed penetrating through the housing 13 and the support plate 30a, enabling the laser beam from the laser head 31 to be irradiated to the inside of the housing 13.

Referring to Fig. 1b, two parallel guide members 34a and 34b are arranged on the support plate 30a. The guide members 34a and 34b are extending in parallel with the lengthwise direction of the resin pipe 1. A slider 33 coupled to the cylinder 32 slides between the guide members 34a and 34b in the lengthwise direction of the resin pipe 1.

As can be seen from Figs. 1a and 1b, a feed shaft 38 of a ball-and-screw device extends neighboring the guide member 34b, and a nut 39 of the ball-and-screw device is coupled to the slider 33 through a slot (not shown) of the guide member 34b. A pulley 36b attached to an end of the feed shaft 38 is associated with a pulley 36a of a rotary shaft of a motor 35 via a timing belt 37. Therefore, upon rotating the motor 35 forward and reverse, the nut 39 and the slider 33 of the laser irradiation portion 30 slide toward the support member 11 or the support member 12 along the outer circumferential surface of the housing 13 in parallel with the resin pipe 1.

Though not shown in Fig. 1a, a counterweight 29 is attached to the outer circumferential surface of the housing 13 on the side opposite to the laser irradiation portion 30 as shown in Fig. 2a. The weight of the counterweight 29 is substantially equal to the weight of the entire laser irradiation portion 30 inclusive of the motor 35 and the like, and the counterweight 29 plays the role of smoothly rotating the housing 13 about the axis of the resin pipe.

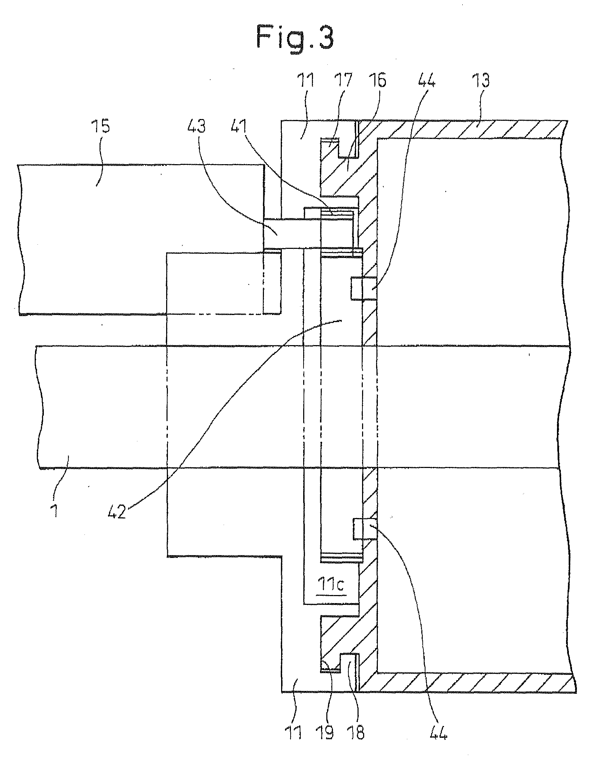

Fig. 3 is a partial enlarged view of the apparatus for melt-adhering resin pipes shown in Fig. 1. Referring to Fig. 3, a ring-like protrusion 16 is provided on an end surface of the housing 13 in concentric with the cylindrical housing 13. Further, a flange 17 extends outward in the radial direction from the end of the protrusion 16. On the contrary, a groove 19 of a shape corresponding to the protrusion 16 and the flange 17 is formed in the inner surface of the support member 11 that faces the end surface of the cylindrical housing 13.

Though not shown, members similar to the protrusion 16 and the flange 17 are also provided on the end surface of the housing 13 on the opposite side thereof, and the groove similar to the groove 19 is also formed in the support member 12. The support members 11, 12 and the housing 13 are each constituted by half-split members, and the support members 11, 12 and the housing 13 are so assembled that the protrusion 16 and the flange 17 can be inserted in the groove 19. Therefore, the housing 13 equipped with the laser irradiation portion 30 is allowed to rotate relative to the support members 11 and 12.

The motor 15 shown in Fig. 3 is a drive source used for rotating the housing 13. The rotary shaft 43 of the motor 15 extends into space 11c in the support member 11 and has a drive gear 41 attached to an end of the rotary shaft 43. A driven gear 42 that engages with the drive gear 41 is arranged in concentric with the housing 13, and is coupled to the end surface of the housing 13 by a plurality of coupling portions 44.

The support member 12 requires none of the motor, related drive gear or driven gear, but may be provided with them. It can be seen from Fig. 3 that an opening has been formed in the driven gear 42, too, permitting the resin pipe 1 to pass therethrough.

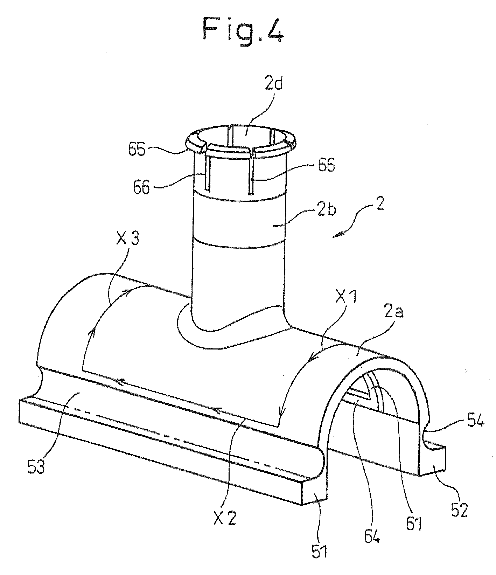

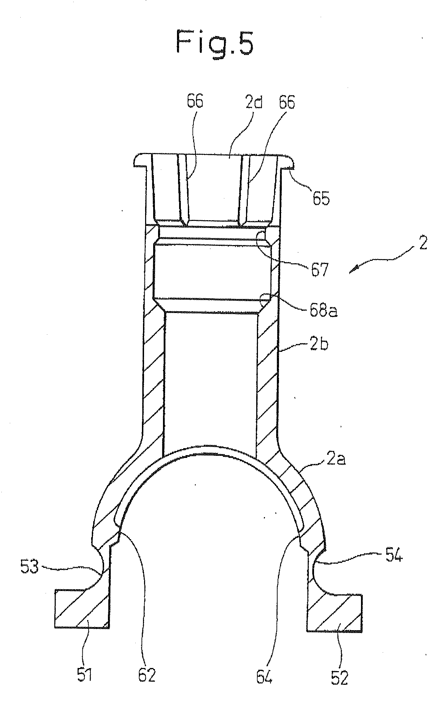

A saddle joint 2 mounted on the resin pipe 1 will now be described prior to describing the operation of the apparatus 10 for melt-adhering resin pipes of the invention. Fig. 4 is a perspective view of the saddle joint, and Fig. 5 is a sectional view thereof in the transverse direction between a line X1 and a cylindrical portion 2b shown in Fig. 4. As described above, the saddle joint 2 is made from a resin having property to transmit through the laser beam, and includes a saddle portion 2a and a cylindrical portion 2b. Two lower edge portions 51 and 52 of the saddle portion 2a are so formed as include lengthwise protrusions 51 and 52 protruding outwards. Lengthwise recessed portions 53 and 54 extending in parallel with the lengthwise protrusions 51 and 52 are formed in the outer surfaces of the saddle portion 2a over the lengthwise protrusions 51 and 52. It can be seen from Fig. 5 that the portions of the saddle portion 2a, where the lengthwise recessed portions 53, 54 are formed, have a thickness smaller than the thickness of other portions thereof.

Further, as shown in Fig. 5, bulging portions 62 and 64 bulging inward from the inner surface of the saddle portion 2a extends in the lengthwise direction at positions corresponding to the lengthwise recessed portions 53 and 54. As can be seen from Fig. 4, attention should be given to that the lengthwise bulging portions 62 and 64 do not extends over the entire saddle portion 2a in the lengthwise direction thereof.

As can be seen with reference to Fig. 4, a solid line X1 extends on the outer surface of the saddle portion 2a in the circumferential direction substantially at the center between the end of the saddle portion 2a and the cylindrical portion 2b. A circumferential bulging portion 61 extending so as to be corresponded to the solid line X1 is formed on the inner surface of the saddle portion 2a. The circumferential bulging portion 61 is coupled at its one end to the lengthwise bulging portion 64, and is coupled at its other end to the lengthwise bulging portion 62.

Likewise, a circumferential bulging portion 63 (not shown) corresponding to a solid line X3 that extends on the outer surface of the saddle portion 2a in the circumferential direction substantially at the center between the other end of the saddle portion 2a and the cylindrical portion 2b is formed on the inner surface of the saddle portion 2a. Like the case of the circumferential bulging portion 61, the circumferential bulging portion 63 is coupled at its both ends to the lengthwise bulging portions 62 and 64.

Described below is the operation of the apparatus 10 for melt-adhering resin pipes of when the saddle joint 2 is to be melt-adhered to the resin pipe 1. First, a resin material having property to absorb laser beam is applied to the ends of the bulging portions 61 to 64 by a known method. After the resin material is dried, the saddle joint 2 is mounted on the resin pipe 1 at a desired position.

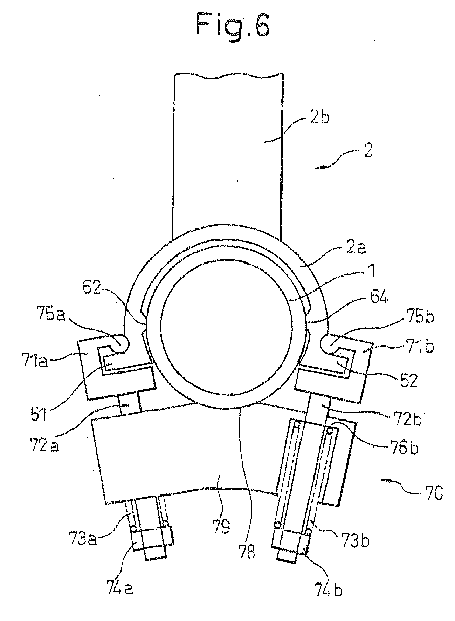

Then, by using a pushing member 70 for the saddle joint, the saddle portion 2a of the saddle joint 2 is pushed onto the resin pipe 1. Fig. 6 is a sectional view in the transverse direction illustrating the operation of the pushing member for the saddle joint used in the apparatus for melt-adhering resin pipes. As shown in Fig. 6, the pushing member 70 for the saddle joint includes a base 79 having a receiving portion 78 that engages with a part of the circumferential surface of the resin pipe 1. The width of the base 79 is larger than the outer diameter of the saddle portion 2a. A shaft 72a having a hook member 71a attached to an end thereof is inserted in a hole on one end side of the base 79. The base end of the shaft 72a is tightened by a nut 74a. A spring 73a is urged between the nut 74a and a recessed portion 76a of the base 79 (see recessed portion 76b in Fig. 6). Therefore, the spring 73a is normally so acting as to separate the hook member 71a away from the base 79.

As can be seen from Fig. 6, another hook member 71b is similarly provided on the other end side of the base 79. Another hook member 71b and the related members 72b to 76b are the same as the members 72a to 76a related to the above-mentioned hook member 71a, and are not described here again. As shown, the shaft 72a and the shaft 72b are arranged at such angles that they converge each other in a direction in which they separate away from the saddle portion 2a.

As shown in Fig. 6, the hook members 71a and 71b are engaged with the lengthwise protrusions 51 and 52 of the saddle portion 2a and, thereafter, the nuts 74a and 74b are operated to pull the saddle portion 2a toward the base 79. For this purpose, it can be seen that the ends 75a, 75b of the hook members 71a, 71b have a shape that corresponds to the lengthwise recessed portions 53 and 54.

As can be seen from Fig. 6, if the saddle portion 2a is pulled toward the base 79, the lengthwise bulging portions 62 and 64 are pushed onto the outer surface of the resin pipe 1, and the portions lower than the lengthwise bulging portions 62 and 64 are curved inward.

Thus, in a state where the saddle joint 2 is pushed onto the resin pipe 1 by using the pushing member 70 for the saddle joint, the housing 13 and the support members 11 and 12 are assembled in a manner as described above so that the saddle joint 2 is arranged in the apparatus 10 for melt-adhering resin pipes. Then, the motor 15 of the apparatus 10 for melt-adhering resin pipes is driven to rotate the housing. Thus, the position for irradiating the laser beam from the laser head 31 is determined on the outer surface of the saddle portion 2a corresponding to a position where the lengthwise bulging portion 64 intersects the circumferential bulging portion 61.

Then, upon operating the laser irradiation portion 30, the laser beam is irradiated to the saddle joint 2 in the housing 13 from the laser head 31. The saddle joint 2 permits laser beam to pass through. Therefore, the laser beam transmits through the saddle joint 2. As described above, the laser beam-absorbing material has been applied to the end of the bulging portion 61 of the saddle joint 2. Therefore, the end of the bulging portion 61 and the resin pipe 1 are heated by the laser beam, and the bulging portion of the saddle joint 2 and the resin pipe 1, are melt-adhered with each other.

If the motor 15 is, further, driven, the housing 13 equipped with the laser irradiation portion 30 rotates about the resin pipe 1. Therefore, the portion to where the laser beam is irradiated continuously moves in the circumferential direction of the saddle portion 2a along the solid line X1 of the saddle portion 2a. This makes it possible to melt-adhere the circumferential bulging portion 61 corresponding to the solid line X1 to the resin pipe 1.

When the portion to where the laser beam is irradiated arrives at the end of the circumferential bulging portion 61 that intersects the lengthwise bulging portion 62, the motor 15 stops to discontinue the rotation of the housing 13. Then, the motor 35 is driven to slide the slider 33 of the laser irradiation portion 30 in the axial direction of the resin pipe 1 along the guide members 34a and 34b. Therefore, the portion to where the laser beam is irradiated moves in the axial direction along the solid line X2, and the lengthwise bulging portion 62 of the saddle portion 2a corresponding to the solid line X2 is melt-adhered to the resin pipe 1.

After the melt-adhesion of the lengthwise bulging portion 62 is finished, the motor 35 stops and the motor 15 is rotated reverse. Therefore, the portion where the laser beam is irradiated moves in the circumferential direction along the solid line X3, and the circumferential bulging portion 63 is melt-adhered to the resin pipe 1. Finally, the motor 15 is stopped and the motor 35 is rotated reverse, so that the lengthwise bulging portion 64 corresponding to the solid line X4 is similarly melt-adhered to the resin pipe 1. This enables the saddle joint 2 to be melt-adhered to the resin pipe 1 along the solid lines X1 to X4.

When the melt-adhering work is conducted by using the laser beam as described above, no strain occurs in the saddle joint 2 and in the resin pipe 1. Further, since the melt-adhesion has been continuously effected along the four solid lines X1 to X4, the melt-adhered portions along the solid lines X1 to X3 have already been cooled and solidified by the time when the melt-adhering work is conducted along the last solid line X4. According to the present invention, therefore, the waiting time can be shortened after the melt-adhering works have all been finished.

Further, the apparatus 10 for melt-adhering resin pipes of the invention does not have to use an expensive EF joint having a heating wire imbedded therein but uses an ordinary joint making it possible to conduct the melt-welding operation at a relatively low cost. Therefore, the apparatus 10 for melt-adhering resin pipes of the invention is particularly advantageous when a large number of joints have to be melt-adhered. The saddle joint 2 having bulging portions 61 to 64 does not necessarily have to be used, and the apparatus 10 for melt-adhering resin pipes of the invention can be applied even to a saddle joint 2 without bulging portions. In this case, therefore, the cost necessary for the melt-adhering operation can be further decreased. Moreover, the saddle joint 2 is pushed onto the resin pipe 1 by the pushing member 70 for saddle joint. Therefore, according to the invention, the bulging portions of the saddle joint 2 are reliably melt-adhered to the resin pipe 1.

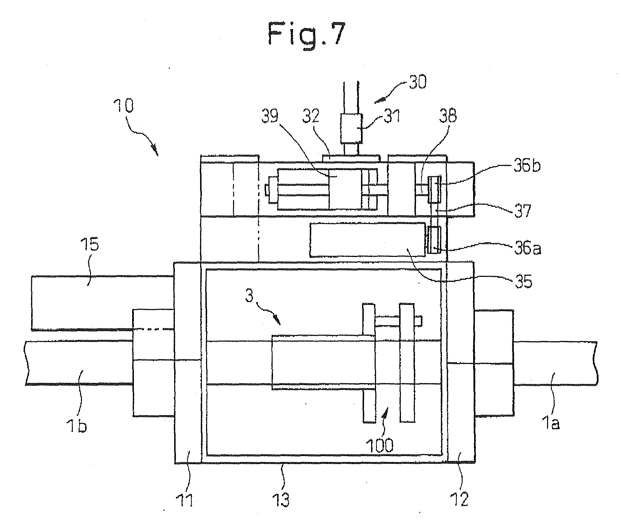

Then, with reference to Fig. 7, a case where a socket joint is melt-adhered to the resin pipe by using the apparatus for melt-adhering resin pipes, will be explained. In Fig. 7, two resin pipes 1a and 1b having an equal outer diameter are supported by the support members 11 and 12, respectively. As shown, the opposing ends of the resin pipes 1a and 1b are inserted in both ends of a common socket joint 3.

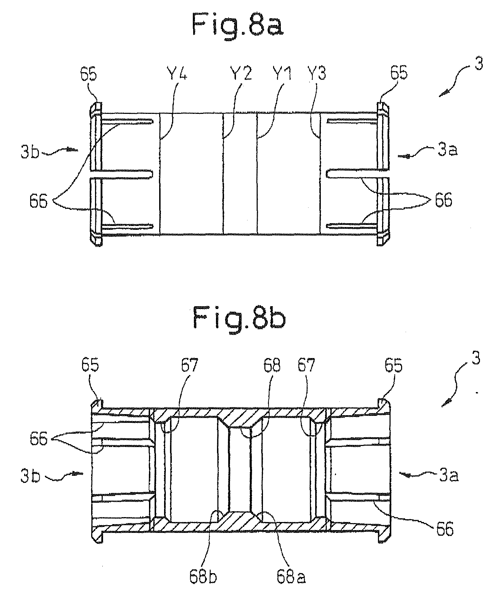

Fig. 8a is a side view of the socket joint, and Fig. 8b is a side sectional view of the socket joint. As shown in the drawings, annular protuberances 65 extending outward in the radial direction are formed at the edge portions of openings 3a and 3b of the socket joint 3. Further, a plurality of slits 66 are formed in the openings 3a and 3b extending in the lengthwise direction from the openings 3a and 3b by a predetermined distance.

As shown in Fig. 8b, circumferential bulging portions 67 extending in the circumferential direction are provided on the inner surface of the socket joint 3 at the end positions of slits 66 on the sides of the openings 3a and 3b. On the inner surface of the socket joint 3, further, a central bulging portion 68 extending in the circumferential direction is provided substantially at the center between the two circumferential bulging portions 67. As shown, the central bulging portion 68 has a substantially trapezoidal shape in cross section, and has two tilted surfaces 68a and 68b. The tilted surfaces 68a and 68b are of a shape corresponding to the ends of the resin pipes 1a and 1b.

In Fig. 8a, four solid lines Y1 to Y4 extending on the outer surface of the socket joint 3 in the circumferential direction thereof are located at positions corresponding to the tilted surfaces 68a, 68b of the central bulging portion 68, the circumferential bulging portion 67 on the side of the opening 3a, and the circumferential bulging portion 67 on the side of the opening 3b shown in Fig. 8b.

Described below is the operation of the apparatus 10 for melt-adhering resin pipes of when the resin pipes 1a and 1b are to be melt-adhered to the socket joint 3. First, a resin material having property to absorb laser beam is applied onto the ends of the circumferential bulging portions 67 and onto the tilted surfaces 68a and 68b by known means. After the resin material is dried, the resin pipes 1a and 1b are inserted in the openings 3a and 3b of the socket joint 3.

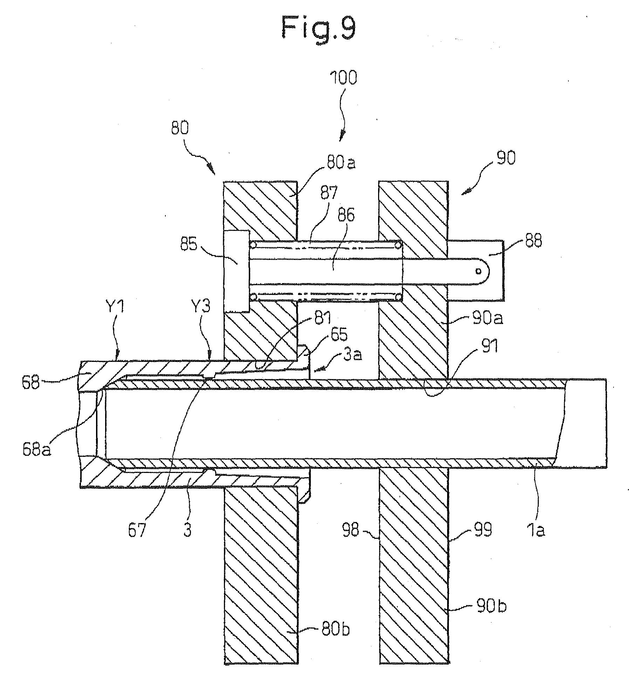

Then, the socket joint 3 is pushed onto the resin pipes 1a and 1b by using a pushing member 100 for socket joint. Fig. 9 is a partial sectional view in the lengthwise direction of the pushing member 100 for the socket joint used in the apparatus for melt-adhering resin pipes of the invention. As shown in Fig. 9, the pushing member 100 for socket joint is constituted by a socket joint clamp 80 and a resin pipe clamp 90.

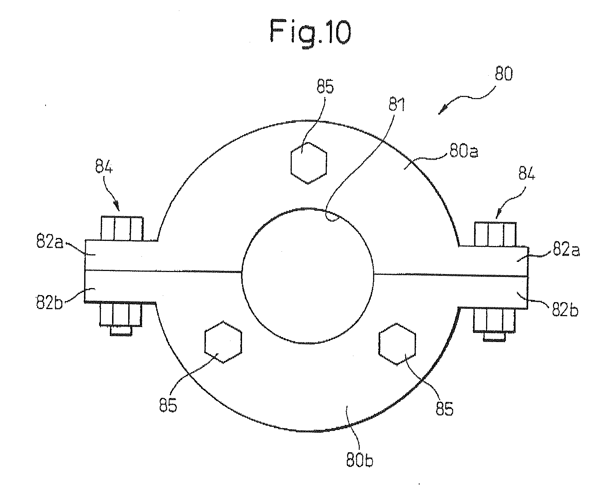

Fig. 10 is a plan view of the socket joint clamp of the pushing member for the socket joint. The socket joint clamp 80 is a substantially ring-shaped member, and the inner diameter of a central opening 81 of the socket joint clamp 80 is substantially equal to the outer diameter of the socket joint 3. As shown in Fig. 10, the socket joint clamp 80 is constituted by two half-split portions 80a and 80b. Extension portions 82a and 82b are provided at both ends of the half-split portions 80a and 80b, and extend outward in the radial direction. The extension portions 82a and 82b are assembled together by using screw-nut mechanisms 84.

The resin pipe clamp 90 shown in Fig. 9, too, is constituted substantially in the same manner as the socket joint clamp 80. Extension portions 92a and 92b of the two half-split portions 90a and 90b are assembled by using screw-nut mechanisms 94 that are not shown. The inner diameter of the central opening 91 of the resin pipe clamp 90 is substantially equal to the outer diameter of the resin pipe 1a.

As shown in Fig. 10, a plurality of, e.g., three bolts 85 are arranged maintaining an equal distance on the surface of the socket joint 3 of the socket joint clamp 80. As shown in Fig. 9, the shaft portion 86 of the bolt 85 penetrates through the socket joint clamp 80 and the resin pipe clamp 90. An end of the shaft portion 86 is coupled to a cam mechanism portion 88 provided on a distal surface 99 of the resin pipe clamp 90. A spring 87 is arranged between a recessed portion in a proximal surface 98 of the resin pipe clamp 90 and the bolt 85 to urge the socket joint clamp 80 in a direction to separate away from the resin pipe clamp 90 at all times. Other bolts 85 shown in Fig. 10, too, are similarly urged by a spring.

As shown in Fig. 9, the socket joint 3 and the resin pipe 1a inserted in the socket joint 3 are arranged on the half-split portions 80b and 90b on the lower side. The position of the half-split portion 80b may be on the inner side of the annular protuberance 65 of the socket joint 3. Then, the half-split portions 80a and 90a on the upper side are placed on the socket joint 3 and on the resin pipe 1a, and extension portions 82 of the half-split portions are fastened together by screw-nut mechanisms 84 and 94. At this moment, the screw-nut mechanism 84 of the socket joint clamp 80 does not have to be so tightly fastened.

Thereafter, the cam mechanism portion 88 is driven to pull the bolt 85 toward the resin pipe clamp 90 against the spring 87. Therefore, the socket joint clamp 80 engaged with the bolts 85 as an entire moves toward the resin pipe clamp 90. The edge portion of the central opening 81 of the socket joint clamp 80 is engaged with the annular protuberance 65 of the socket joint 3 to further pull it, whereby the edge at the end of the resin pipe 1a comes into perfect contact with the tilted surface 68a of the socket joint 3.

Then, the housing 13 and the support members 11, 12 are assembled as described above, so that the socket joint 3 is arranged in the apparatus 10 for melt-adhering resin pipes. In this state, the motor 35 is driven, the laser irradiation portion 30 is slid along the outer surface of the housing 13 in the axial direction, so that the position for irradiating the laser beam from the laser head 31 is determined on the outer surface of the socket joint 3 corresponding to the tilted surface 68a of the central bulging portion 68.

Then, in the same manner as described above, the laser beam from the laser head 31 is irradiated to the socket joint 3 to heat and melt-adhere the tilted surface 68a of the socket joint 3 to the resin pipe 1a. Then, the motor 15 is driven to rotate the housing 13 equipped with the laser irradiation portion 30 about the resin pipe 1. Therefore, the portion for irradiating the laser beam continuously moves on the circumferential surface of the socket joint 3 along the solid line Y1 of the socket joint 3. Therefore, the tilted surface 68a corresponding to the solid line Y1 can be continuously melt-adhered to the resin pipe 1a.

Though not shown, the similar socket joint clamp 80 and the resin pipe clamp 90 are also arranged on the opening 3b side of the socket joint 3. After the completion of the melt-adhesion along the solid line Y1, the position of the laser irradiation portion 30 is changed by the motor 35 in the axial direction. Thereafter, the motor 15 is driven to melt-adhere the tilted surface 68b of the socket joint 3 to the resin pipe 1b along the solid line Y2 (see Fig. 8a).

Then, the screw-nut mechanism 84 of the socket joint clamp 80 is completely tightened on the side of the opening 3a. Since the slits 66 have been formed in the opening 3a of the socket joint 3, the portion from the circumferential bulging portion 67 to the opening 3a deflects inward due to the tightening action, and the circumferential bulging portion 67 is pushed onto the resin pipe 1a.

Thereafter, the motor 35 is driven so that the position for irradiating the laser beam is determined on the outer surface of the socket joint 3 corresponding to the circumferential bulging portion 67. Then, the motor 15 is driven to rotate the housing 13 about the resin pipe 1 to thereby melt-adhere the circumferential bulging portion 67 to the resin pipe 1a in the circumferential direction along the solid line Y3. Further, the socket joint clamp 80 on the opening 3b side, too, is likewise tightened by the screw-nut mechanism 84 and, thereafter, the circumferential bulging portion 67 is similarly melt-adhered to the resin pipe 1b on the opening 3b side of the socket joint 3 along the solid line Y4 (see Fig. 8a). Thus, the socket joint 3 is melt-adhered to the resin pipes 1a and 1b.

It will be understood that the effect similar to the one described above is thus obtained even when the socket joint 3 is melt-adhered. At the time of melt-adhering the socket joint 3 to the resin pipes 1a and 1b, further, the tilted surfaces 68a and 68b on the inner side are melt-adhered, first, and, thereafter, the circumferential protuberances 67 on the outer sides are melt-adhered to enhance the sealing action between the socket joint 3 and the resin pipes 1a, 1b.

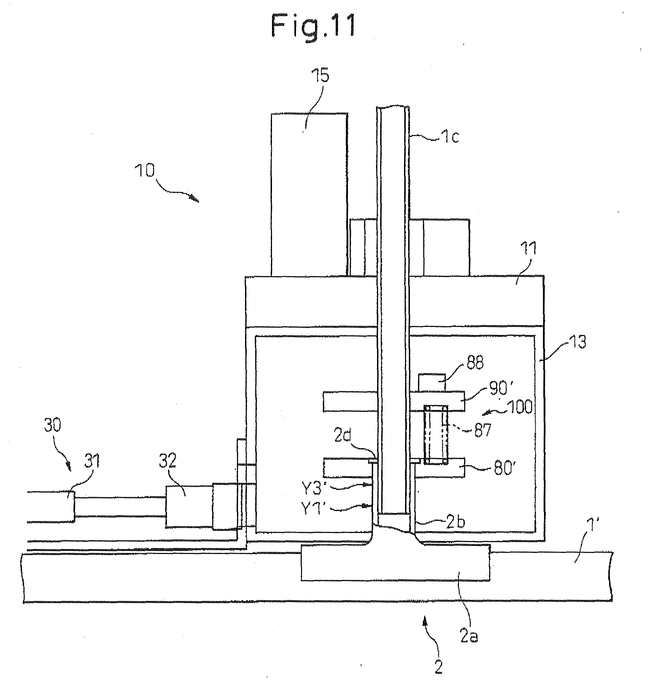

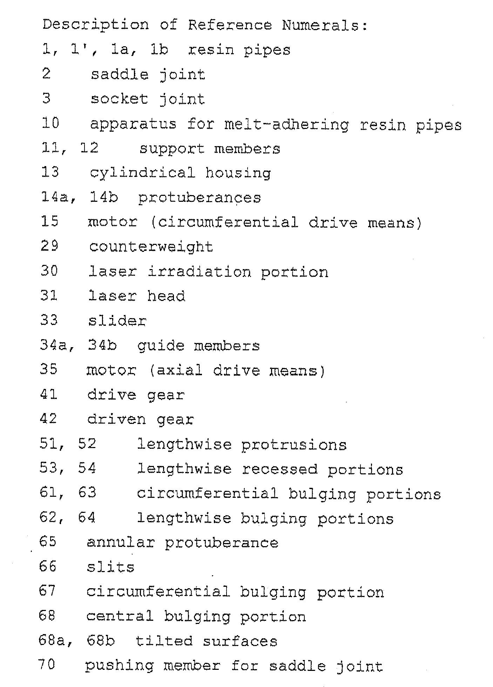

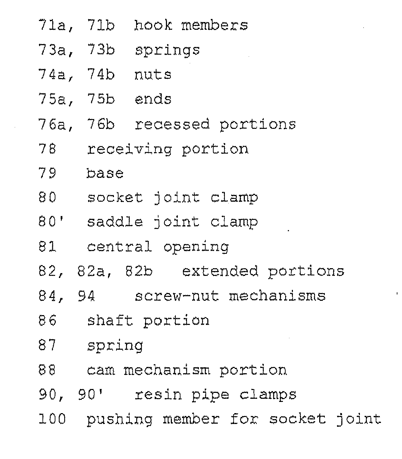

Fig. 11 is a side view of the apparatus for melt-adhering resin pipes according to a second embodiment of the invention. In the second embodiment, a resin pipe 1c is melt-adhered to the cylindrical portion 2b of the saddle joint 2. Concretely, the saddle joint 2 is placed on the resin pipe 1' that has been arranged already in a horizontal direction, and the resin pipe 1c is newly attached as a branch pipe. Therefore, the resin pipe 1c in Fig. 11 substantially extends in a vertical direction.

In this connection, as can be seen with reference again to Figs. 4 and 5, an annular protuberance 65 and a plurality of slits 66 are formed in the opening 2d of the cylindrical portion 2b of saddle joint 2. Further, a circumferential bulging portion 67 and a tilted surface 68a are formed on the inner surface of the cylindrical portion 2b. The annular protuberance 65, slits 66, circumferential bulging portion 67 and tilted surface 68a are the same as those described with reference to Fig. 8, and are not described here again. Further, a laser beam-absorbing material has been applied onto the circumferential bulging portion 67 and the central bulging portion 68 in advance.

According to the second embodiment shown in Fig. 11, the cylindrical portion 2b of the saddle joint 2 is directly inserted in the opening at the end surface of the housing 13. In other words, no support member 12 is used. Therefore, in the second embodiment, the resin pipe 1c is slightly supported by the opening of the housing 13, but is mainly cantilevered by the support member 11. In the second embodiment, the opening of the housing 13 substantially corresponds to the outer diameter of the cylindrical portion 2b.

The operation for melt-adhering the cylindrical portion 2b of the saddle joint 2 to the resin pipe 1c according to the second embodiment is similar to the one described with reference to Fig. 9. In other words, the resin pipe 1c and the cylindrical portion 2b of the saddle joint 2 are tightened by using a saddle joint clamp 80' and a resin pipe clamp 90' and, thereafter, the motor 15 is driven to effect the melt-adhering operation in the circumferential direction along a solid line Y1' that corresponds to the tilted surface 68a (see Fig. 5). Thereafter, the motor 35 is driven to move the laser head 31 in the axial direction, and the motor 15 is driven again to effect the melt-adhering operation in the circumferential direction along a solid line Y3' that corresponds to the circumferential bulging portion 67. In other words, in the second embodiment, too, the melt-adhesion is effected for the tilted surface 68a positioned on the inner side and, thereafter, the melt-adhesion is effected for the circumferential bulging portion 67 positioned on the outer side. It will thus be obvious that the second embodiment, too, makes it possible to obtain the similar effect as the one described above.

In the embodiments described above with reference to the drawings, the material for absorbing laser beam is applied to predetermined positions of the saddle joint 2 and the socket joint 3. However, the material for absorbing laser beam does not necessarily have to be applied. In other words, even when the material for absorbing laser beam is not applied, the joint and the resin pipe can be melt-adhered together at the pushed portions if the bulging portions and the resin pipe are pushed to each other by using clamps 80 and 90.

Further, the constitutions of the pushing member 70 for saddle joint and the pushing member 100 for socket joint are not limited to those of the embodiments described with reference to the drawings. The pushing member for saddle joint and the pushing member for socket joint of any form can be used provided they are capable of pushing the saddle joint 2 or the socket joint 3 onto the resin pipe.

In the foregoing a case was described in which the saddle joint 2 and the socket joint 3 were melt-adhered. However, it will be obvious to those skilled in the art that other joints such as T-shaped joint and elbow joint can also be melt-adhered to resin pipes by similar methods.

Though the invention was described above by way of typical embodiments, it should be noted that people skilled in the art will be able to further modify or change the invention in the ways as described above or in other ways, as well as to make omissions or additions without departing from the scope of the invention.

## Claims

1. An apparatus for melt-adhering resin pipes, comprising support means for supporting a resin pipe engaged with a resin joint, and laser irradiation means for irradiating a laser beam onto a portion of said resin pipe engaged with said resin joint to melt-adhere said resin joint and said resin pipe together.

2. The apparatus for melt-adhering resin pipes according to claim 1, wherein said resin pipe is made from a resin material having property to absorb the laser beam, said resin joint is made from a resin material having property to transmit through the laser beam, and a material having property to absorb the laser beam is applied onto at least a portion on the inner surface of said resin joint.

3. The apparatus for melt-adhering resin pipes according to claim 1 or 2, further comprising a cylindrical housing for surrounding said resin joint in concentric with said resin pipe, and said support means is engaged with the end surfaces of said cylindrical housing.

4. The apparatus for melt-adhering resin pipes according to claim 3, wherein said laser irradiation means is mounted on the circumferential surface of said cylindrical housing, and the apparatus further comprises a circumferential drive means for driving said laser irradiation means together with said cylindrical housing in the circumferential direction about the axis of said resin pipe.

5. The apparatus for melt-adhering resin pipes according to claim 4, wherein a counterweight for said laser irradiation means is provided on the side opposite to said laser irradiation means with said cylindrical housing interposed therebetween.

6. The apparatus for melt-adhering resin pipes according to any one of claims 3 to 5, further comprising an axial drive means for driving said laser irradiation means so as to slide along the outer surface of said cylindrical housing in the axial direction of said resin pipe.

7. The apparatus for melt-adhering resin pipes according to any one of claims 1 to 6, further comprising a pushing means for pushing said resin joint to said resin pipe in the proximity of a portion where said resin pipe is engaged with said resin joint.

8. The apparatus for melt-adhering resin pipes according to any one of claims 1 to 7, wherein said resin joint is a saddle joint or a socket joint.
